# EUROPEAN PATENT APPLICATION

(11) **EP 4 529 970 A1**
(43) Date of publication of application: **02.04.2025**
(21) Application number: 23199924.4
(22) Date of filing: 26.09.2023
(51) Int. Cl.: B01D 45/16, B01D 46/00, B01D 50/20

(54) **DEVICE FOR SEPARATING LIQUID FROM GAS**

(71) Applicant: Donaldson Company, Inc., Bloomington, MN 55431 (US)
(72) Inventor: TRABKA, Mateusz, Bloomington, MN 55431 (US); EIJKELENBURG, Bart, Bloomington, MN 55431 (US)
(74) Representative: IPLodge bv

(57) **Abstract**

The present disclosure relates to a device for separating liquid from gas, comprising a housing being adapted for allowing the passage of gas flow from an inlet opening to an outlet opening; wherein
- an inlet portion of the housing comprises a generally tube-like inlet wall having an inner surface; and
- the inlet portion comprises one or more flow guiding means adapted and arranged such as to define, in combination with the inner surface, two or more independent flow chambers allowing respective complementary portions of the gas flow to flow through.

## Description

### Field of the disclosure

The present disclosure relates to the field of gas purification, such as for instance air purification. It relates to the field of devices for removing liquid, e.g. in the form of droplets, from a gas flow. Preferably the assemblies are used for removing liquid water and moisture from air that is fed to or exits from a fuel cell.

### Background

**The** air flow coming from a fuel cell is known to be particularly rich on liquid water, which is to be removed, for instance to keep the exhaust gas as dry as possible or to protect components from increased mechanical stress due to the presence of water droplets.

An example of a device for removing liquid water from an exhaust gas of a fuel cell is for instance described in DE102022125251 A1.

There is a need in industry for alternative devices that allow an efficient removal of liquid, for instance water, from a gas flow, for instance an air flow coming from a fuel cell.

### Summary

It is an object of embodiments of the present disclosure to provide a device for separating liquid from gas according to claim 1.

The present invention is defined in the appended independent claims. The dependent claims define advantageous embodiments.

In a first aspect of the present disclosure, a device for separating liquid from gas is disclosed, comprising a housing having an inlet portion with an inlet opening, an outlet portion with an outlet opening and a central portion arranged in between the inlet and the outlet portion. The central portion preferably has a first longitudinal axis. The housing is adapted for allowing the passage of gas flow from the inlet portion to the central portion to the outlet portion. The housing is adapted to allow the passage of gas flow from the inlet opening to the outlet opening.

The inlet portion comprises tube-like inlet wall having an inner surface. The inlet wall is arranged about a second longitudinal axis.

The inlet portion comprises one or more flow guiding means adapted and arranged such as to define, in combination with the inner surface, two or more independent flow chambers. The flow chambers allow respective complementary portions of the gas flow to flow through. In other words, all of the incoming gas flow is divided over the flow chambers of the inlet portion of the housing.

In preferred embodiments, the gas comprises or is air. In preferred embodiments, the liquid is liquid water, for instance in the form of water droplets. The liquid can further comprise moisture or other components typically present in fuel cell exhaust gas.

It is an advantage that a high amount of liquid removal from the gas flow or stream can be achieved, for a relatively compact device.

It is a further advantage that the complementary chambers or compartments of the inlet portion of the housing can perform flow guiding and flow straightening, improving the water separation capacities of the device.

According to preferred embodiments, the one or more flow guiding means comprise curved chamber dividing walls extending between opposed sides (for instance upper and lower sides, defined in the direction of gravity, in use) of the inner surface. Preferably, at least one, some or all of the curved chamber dividing walls have at least one bend (for instance perpendicular to the direction of gravity, in use).

According to preferred embodiments, the inlet portion is at least partially curved.

According to preferred embodiments, the inlet portion comprises at least one bend in the generally tube-like inlet wall. Preferably, each of the at least one bend causes a deviation of the tube-like inlet wall corresponding to an angle between 45 and 135 degrees with respect to the second longitudinal axis or with respect to an adjacent bend in the inlet portion (for instance in a plane perpendicular to the direction of gravity, in use).

According to preferred embodiments, an angle between the first and the second longitudinal axis is preferably between 45 and 135 degrees, more preferably between 60 and 120 degrees and even more preferably between 80 and 100 degrees.

According to preferred embodiments, a curvature of the chamber dividing wall(s) is/are such as to generally follow a curvature of the tube-like inlet wall.

According to preferred embodiments, each chamber dividing wall can comprise a plurality of 2, 3, 4 or more subsequent bends (for instance in planes perpendicular to the direction of gravity, in use).

According to preferred embodiments, one or more or all of the chamber dividing walls can be undulated (having undulations for instance in horizontal planes, perpendicular to the direction of gravity, in use).

According to preferred embodiments, the flow guiding means and/or the inner surface comprise one or more liquid droplet catching structures or louvers. Preferably, the one or more liquid droplet catching structures or louvers are elongate and preferably curved and are preferably arranged in a substantially vertical position in use.

According to preferred embodiments, the one or more flow guiding means comprise or are embodied as curved chamber dividing walls extending between opposed sides of the inner surface of the tube-like inlet wall of the inlet portion. The curvature of the chamber dividing wall(s) is/are preferably such as to generally follow a curvature of the tube-like inlet wall.

Preferably, the curved chamber dividing wall(s) extend(s) from the inlet opening, where it/they preferably has/have an orientation generally parallel to the second longitudinal axis, towards an inlet opening of the central portion, where it/they preferably has/have an orientation generally parallel to the first longitudinal axis.

Alternatively, the curved chamber dividing walls extend continuously from first ends at the inlet opening, where they preferably have an orientation generally parallel to the second longitudinal axis, towards respective second ends, whereby the second ends are positioned upstream from the inlet opening of the central portion, for instance at a position being upstream from the inlet opening for more than 1 cm, or more than 2 cm or more than 3 cm.

According to preferred embodiments, at least part or all of the curved chamber dividing walls (and also for instance their first ends and/or second ends) are positioned generally parallel to the direction of gravity, in use. Alternatively, at least part or all of the curved chamber dividing walls (and also for instance their first ends and/or second ends) may be positioned at an angle with the direction of gravity, in use.

According to certain embodiments, the droplet catching structures, catching surfaces, or louvers are positioned at or define the second ends of the curved chamber dividing walls, for instance but not only in combination with embodiments whereby the second ends are positioned upstream from the inlet opening of the central portion.

For instance, the inlet portion of the device can comprise two chambers dividing walls defining three flow chambers. For instance, the first chamber dividing wall can comprise two elongate liquid droplet catching structures or louvers and the second chamber dividing wall can comprise one elongate liquid droplet catching structure or louver.

According to preferred embodiments, the flow guiding means and/or inner surface comprise at least one liquid drainage channel abutting one or more of the liquid droplet catching structures or louvers. For instance, each droplet catching structure or louver can be provided with an associated liquid drainage channel.

Preferably, one or more liquid droplet catching structures or louvers are arranged on one or more of the chambers dividing walls. Preferably, each chamber dividing wall comprises one or more liquid droplet catching structures or louvers, preferably at, or adjacent and downstream of, one or more curves of the curved chamber dividing walls or the inner surface.

Preferably, adjacent or abutting to one or more or each of the liquid droplet catching structures, a liquid drainage channel is provided on the chamber dividing walls.

Preferably, the one or more liquid droplet catching structures or louvers are elongate and curved along their elongation and comprise hook-shaped-type or C-shaped-type cross-section. Preferably, the opening of the hook-shaped or C-shaped cross-section abuts or at least partially forms the drainage channel. Preferably, at least one drainage channel has a substantially circular cross-section.

Preferably, the device further comprises a first drainage cavity connected to the one or more drainage channels by means of at least one or more respective drainage openings. Preferably, the drainage cavity is arranged and adapted for not allowing a substantial or relatively large portion of the gas flow to flow through it.

According to preferred embodiments, the device further comprises a circumferential liquid catching surface arranged circumferentially on the inner wall of the housing, downstream of the one or more flow guiding means. The circumferential liquid catching surface preferably defines a circumferential drainage channel.

Preferably, a further drainage opening is provided for connecting the circumferential drainage channel to the first drainage cavity.

According to preferred embodiments, the device further comprises an arrangement of one or more axial flow inertia separator tube components abutting a separation plate or baffle, positioned downstream of the flow guiding means and, if present, preferably downstream of the circumferential liquid catching surface. These components are preferably arranged and adapted such as to not allow gas flow to bypass the axial flow inertia separator tube components towards the outlet opening.

Preferably, the device comprises a second drainage cavity which is adapted and arranged for collecting liquid removed from the gas flow from the arrangement of one or more axial flow inertia separator tube components. Preferably, the second drainage cavity is adapted and arranged for not allowing a substantial or relatively large portion of the gas flow to flow through it.

### Short description of the drawings

These and further aspects of the present disclosure will be explained in greater detail by way of example and with reference to the accompanying drawings in which:
Fig. 1 to 14 illustrate a first preferred embodiment of the present disclosure.
Fig. 1 is a projected view of the first preferred embodiments, with the access cover removed, and comprises a cut-section view of the inlet portion.
Fig. 2 is a projected view similar to Fig. 1, with an access cover mounted.
Fig. 3 is a detailed view of a droplet catch surface and associated drainage channel of Fig. 2.
Fig. 4 is perspective horizontal cut view.
Fig. 5 is a top view of the horizontal cut of Fig. 4.
Fig. 6 is a perspective vertical cut view comprising uncut portions of the axial flow inertia separator tube arrangement.
Fig. 7 is a similar perspective vertical cut view as for Fig. 6, with focus on the inlet portion and part of the central portion.
Fig. 8, Fig. 9 and Fig. 10 are similar perspective vertical cut views as for Fig. 7, all from slightly different angles.
Fig. 11 is a side view.
Fig. 12 is a bottom view.
Fig. 13 is an angled top view providing details of the inlet portion and circumferential liquid catching means.
Fig. 14 is a side view of the side opposite to the side viewed in Fig. 11.
Fig. 15 shows a second preferred embodiment of the present disclosure, as a horizontal cut top view.
Figures 16 (a), 16(b) and 16(c) illustrate a third preferred embodiment of the present disclosure.

Generally, identical components are denoted by the same reference numerals in the figures.

### Detailed description of preferred embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiments of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

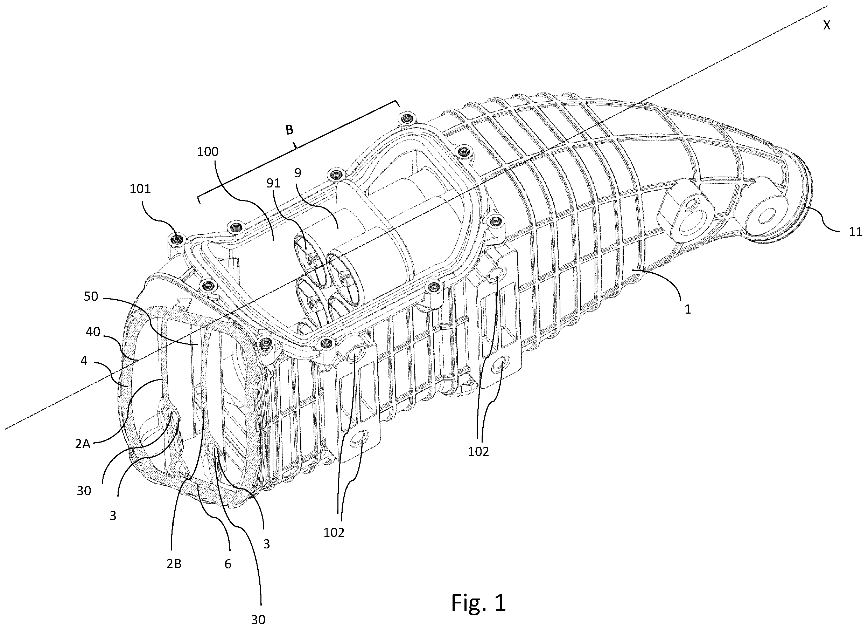

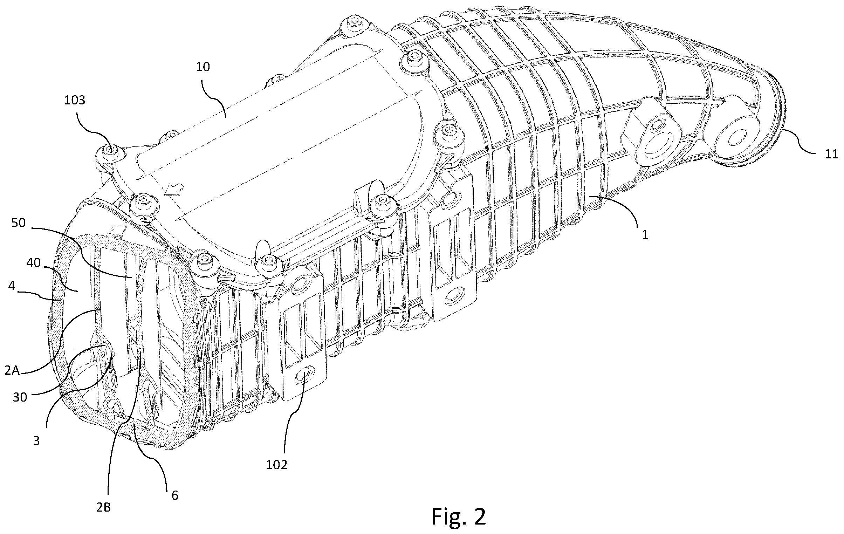

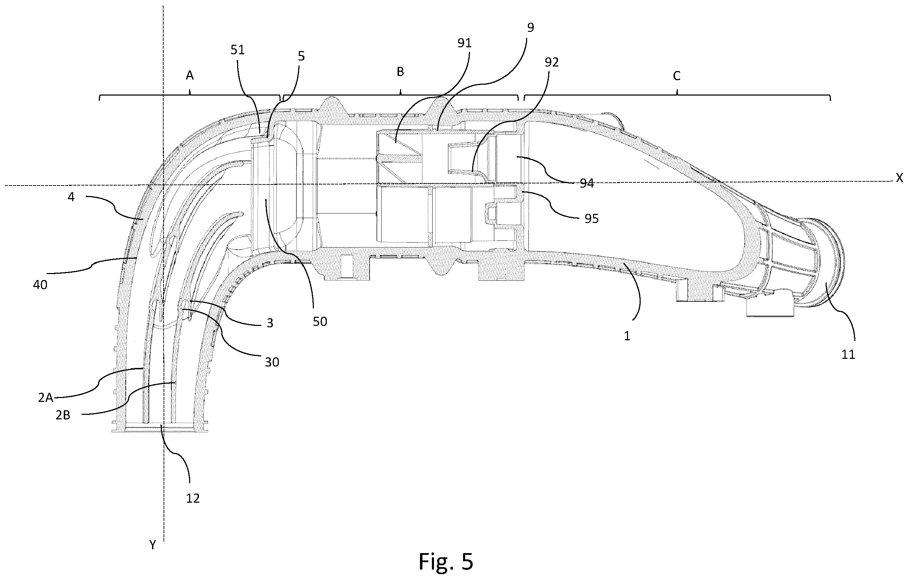

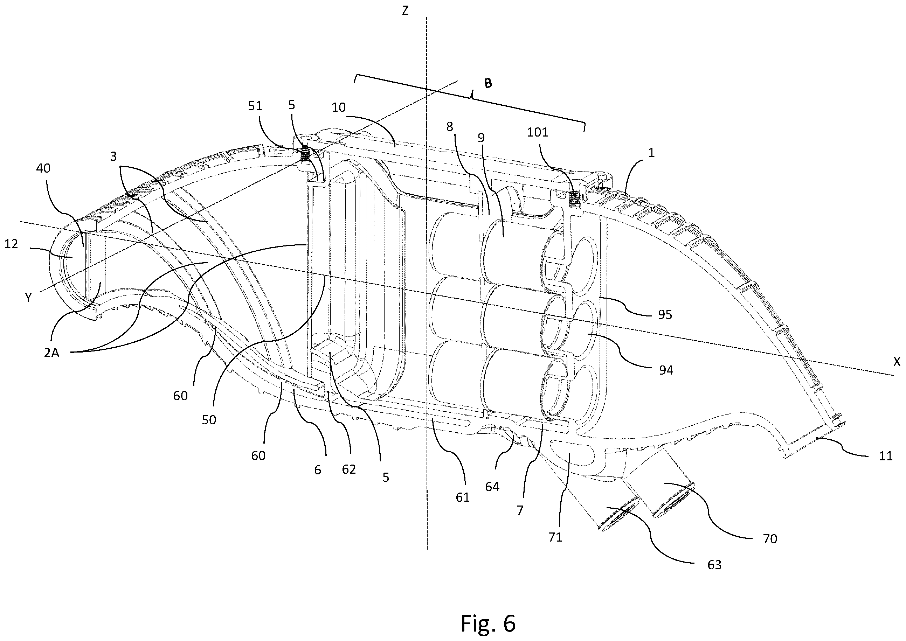

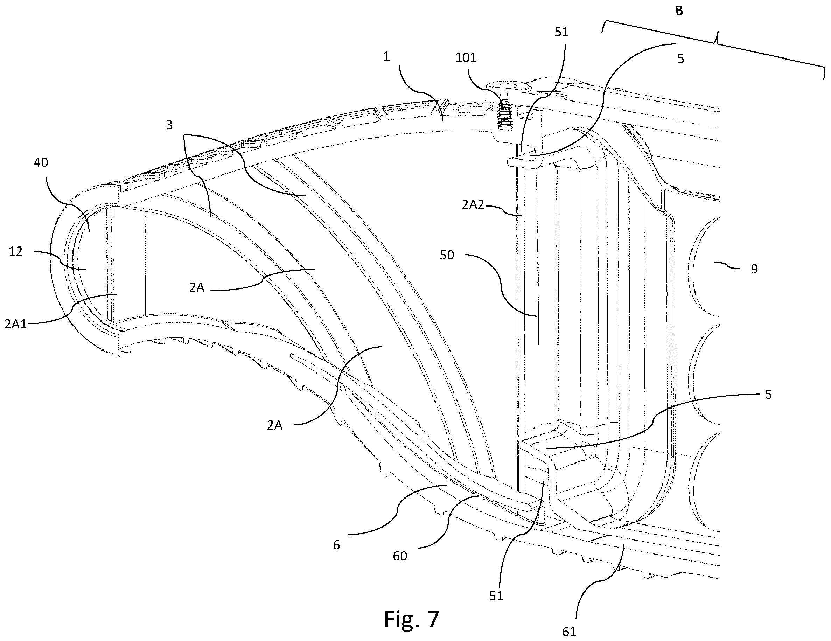

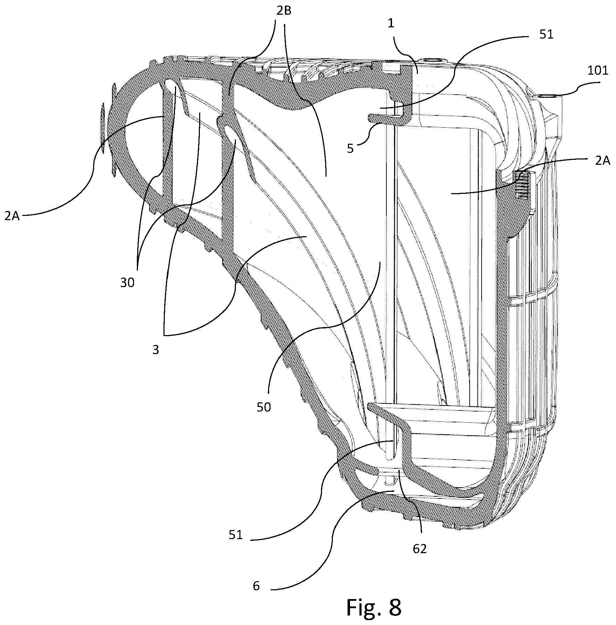

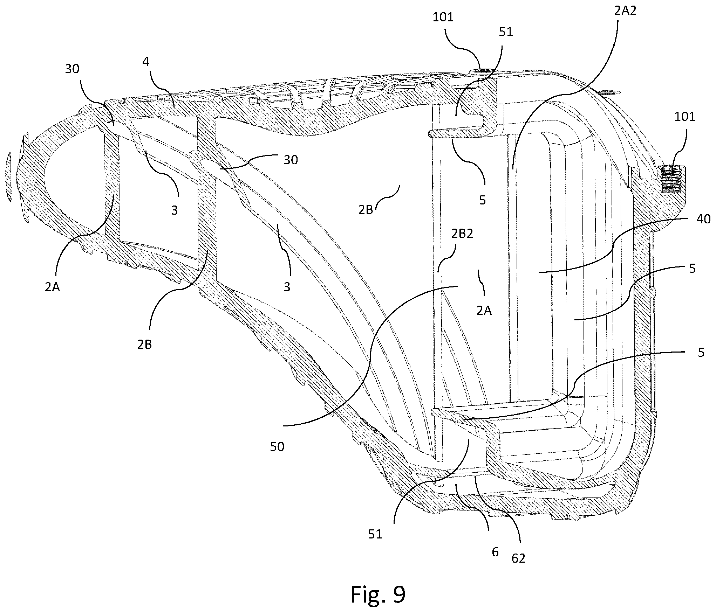

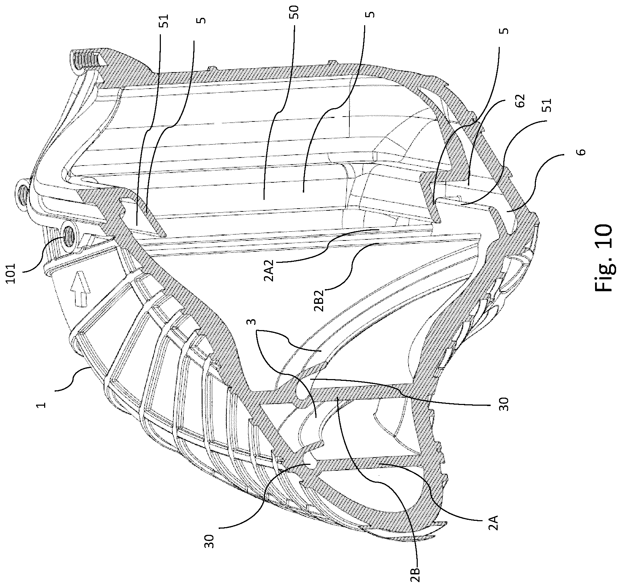

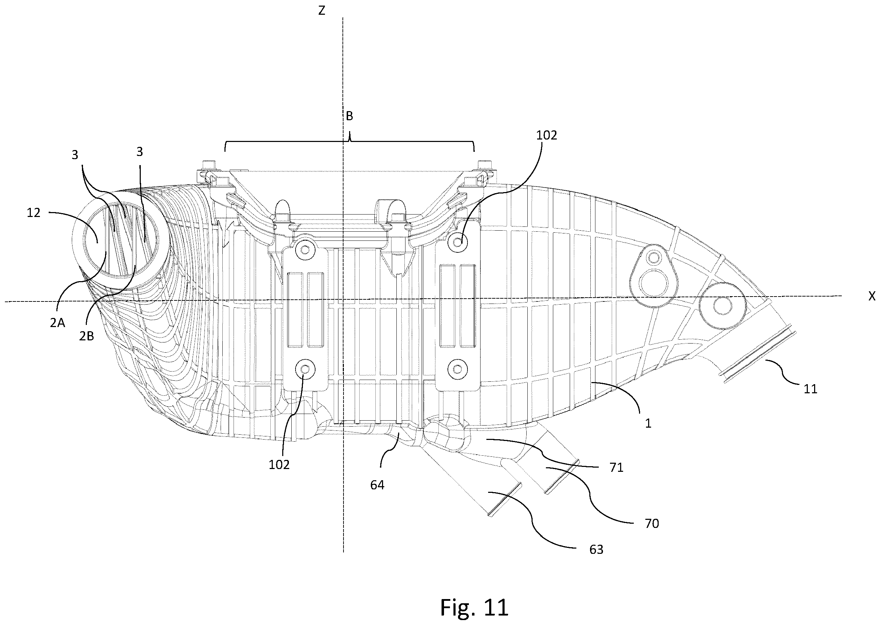

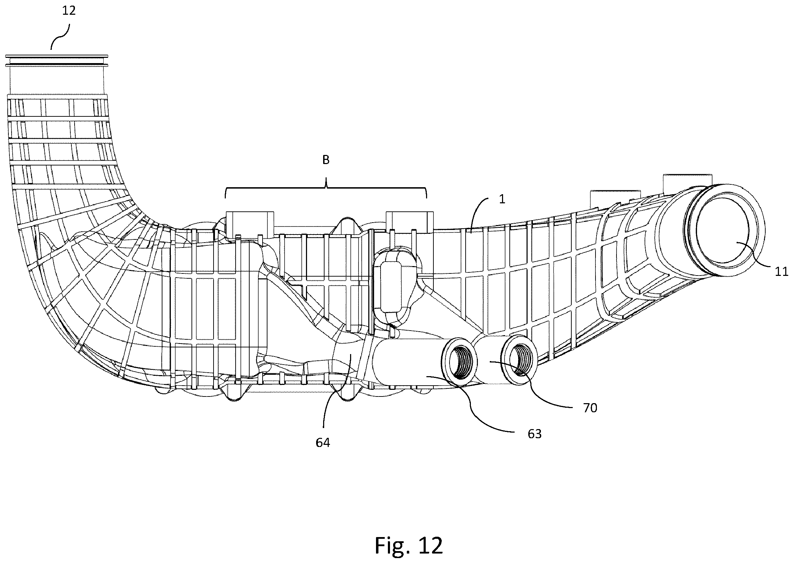

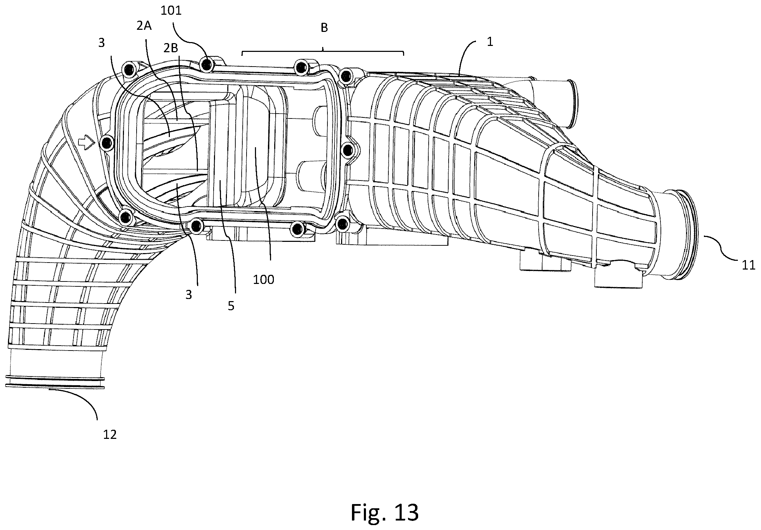

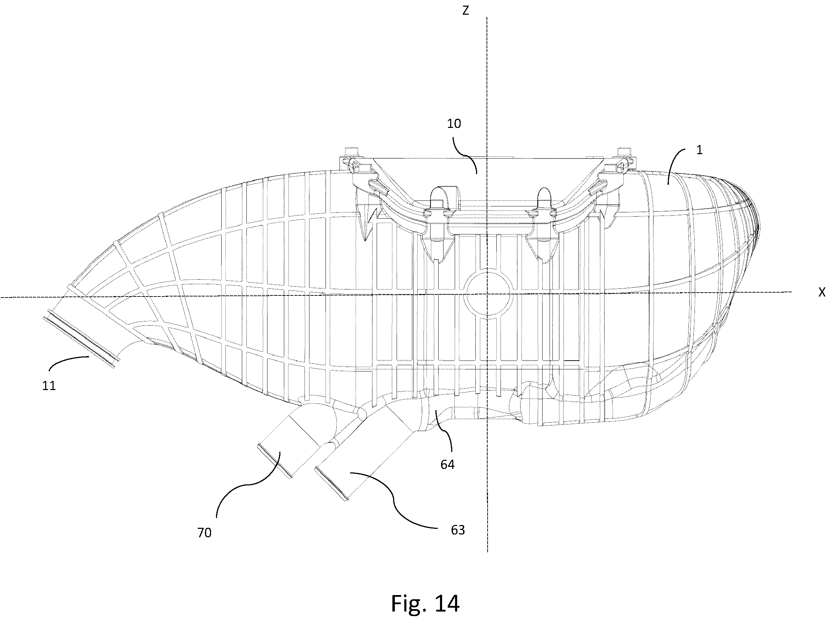

Fig. 1 to 14 illustrate a first preferred embodiment of the present disclosure, details of which are described in the following paragraphs.

The first preferred embodiment of a device for separating liquid from gas comprises housing 1 having an inlet opening 12, an outlet opening 11, and a housing wall connecting inlet opening 12 with outlet opening 11 such that a gas flow entering from the inlet opening is guided through the housing and can leave the housing from the outlet opening 11. Within the housing internal volume, various means are provided for removing or separating liquid droplets, such as water, from the gas flow, for instance a fuel cell exhaust gas flow. It is known that fuel cell exhaust gas flow can comprise a large number of water droplets, which need to be removed. These water droplets can also comprise moisture or other components known to be present in fuel cell exhaust gas. It can be noted that in use as water separator for exhaust gas from a fuel cell, the exhaust gas flow has a higher pressure H near the inlet 12 than near the outlet 11 (lower pressure L).

**The** housing can be considered to have an inlet portion A with the inlet opening 12, an outlet portion C with an outlet opening 11 and a central portion B arranged in between the inlet and the outlet portion. The central portion is preferably elongate and has a first longitudinal axis X. The housing is adapted for allowing the passage of gas flow consecutively through the inlet portion A, the central portion B, and the outlet portion C, when flowing from the inlet opening 12 to the outlet opening 11. The housing can have an access opening 100, for instance in the central portion B, which can be used for instance for cleaning, and a housing cover 10 for closing of the opening 100. The cover can for instance be attached by screws 103 interacting with housing cover screw holes 101. The housing can further comprise housing mount screw holes 102.

The inlet portion A comprises a curved, generally tube-like inlet wall 4 having an inner surface 40. The curvature of the tube-like inlet wall 4 is continuous and does not comprise kinks. The inlet wall 4 is arranged about a second longitudinal axis (Y), which is here at an angle of about 90° with respect to the first longitudinal axis.
Other values for the angle between the first and the second longitudinal axis are also possible, for instance the angle can be between 45 and 135 degrees. Because of the relatively large angle between the tube-like inlet wall 4 and the central portion B, the incoming gas flow is strongly deviated or bent over a short distance. Because of inertia, the water droplets in the gas flow tend to continue going straight on and are pushed outwardly in the bend.

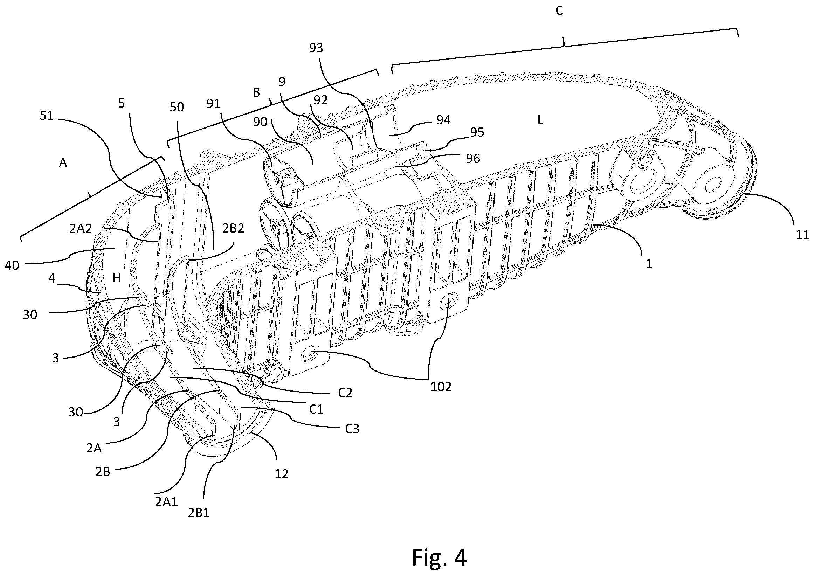

The inlet portion A comprises two flow guiding means 2 embodied as curved chamber dividing walls 2A, 2B. These walls are adapted and arranged such as to define, in combination with the inner surface 40, three independent flow chambers (C1, C2, C3; see e.g. Fig. 4). The flow chambers allowing respective complementary portions of the gas flow to flow through. In other words, the incoming gas flow is divided over the independent flow chambers C1, C2, C3. Embodiments with more than two chamber dividing walls and corresponding flow chambers, are though also considered to be part of the present disclosure.

The curved dividing walls 2A, 2B generally follow the curvature of the inlet portion A or of the tube-like inlet wall 4. They are arranged such that they serve as guide or catch surface for the respective portions of the incoming gas flow. The gas flow of the first chamber C1 sees the inner wall 40 as a catch or guide surface. The gas flow of the second chamber sees the dividing wall 2A as a catch or guide surface. The gas flow of the third chamber sees the dividing wall 2B as a catch and guide surface.

It will be appreciated by the skilled person that by introducing the dividing walls 2A, 2B and thus the separate flow chambers C1, C2, C3, the incoming air can be guided better, and complementary portions thereof can undergo separate treatment, improving the water separation capacity of the device.

The curved chamber dividing walls 2A, 2B extend between opposed sides (between top and bottom) of the inner surface 40 and are preferably oriented vertically (along the direction of the gravitational force) or substantially vertically in use. The curved chamber dividing walls extend continuously from respective first ends 2A1, 2B1 at the inlet opening 12, where they have an orientation generally parallel to the second longitudinal axis, towards respective second ends 2A2, 2B2 at an inlet opening 50 of the central portion B, where they preferably have an orientation generally parallel to the first longitudinal axis.

Alternatively, the curved chamber dividing walls 2A, 2B extend continuously from first ends 2A1, 2B1 at the inlet opening 12, where they have an orientation preferably generally parallel to the second longitudinal axis, towards respective second ends 2A2, 2B2, whereby the second ends 2A2, 2B2 are positioned upstream from the inlet opening 50 of the central portion B, for instance at a position being upstream from the inlet opening 50 for more than 1 cm, or more than 2 cm or more than 3 cm.

According to certain embodiments, the curved chamber dividing walls 2A, 2B, and also for instance their first ends 2A1, 2B1 and/or second ends 2A2, 2B2 may be positioned at an angle with the direction of gravity, in use.

The tube-like inlet wall 4 can be generally of the cylinder-type, cone-type, or box-type (rectangular parallelepiped-type), but can have different shapes. Preferably, the tube-like inlet wall 4 opens up, in other words its cross-section increases, when moving from the inlet opening 12 at its first end to its second end adjacent to the central portion B. The dividing walls 2A and 2B are preferable regularly spaced within the tube-like inlet wall 4, with respect to each other and to the inner surface 40. Preferably, the width of the chambers C1, C2, C3 remains the same or about the same, preferably at any axial or longitudinal position within the tube-like inlet wall 4. Preferably, the cross-sectional area of the chambers C1, C2, C3 remains the same or about the same, preferably at any axial or longitudinal position within the tube-like inlet wall 4.

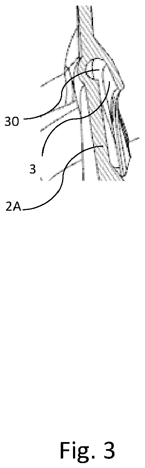

The dividing walls 2A and 2B comprise liquid droplet catching structures, catching surfaces, or louvers 3 (see e.g. Fig. 3), preferably on the side and suitable locations where the water droplets of the incoming gas flow are expected to be guided to or impact because of their inertia during the bending of the gas flow.

The droplet catching structures, catching surfaces, or louvers 3 are elongate and preferably curved along their elongation. The droplet catching structures can for instance comprise a, preferably continuously, curved, for instance helical, shape and can generally be oriented such that it guides droplets which are caught by the catching structures 3 downwards into the housing, in use, the guidance being driven by gravity and preferably also by the incoming gas flow itself. The droplet catching structures 3 comprise hook-shaped-type or C-shaped-type cross-section defining an entry opening. The entry opening is preferably oriented towards the incoming gas flow.

According to certain embodiments, the droplet catching structures, catching surfaces, or louvers 3 are positioned at or define the second ends 2A2, 2B2 of the curved chamber dividing walls 2A, 2B, for instance but not only in combination with embodiments whereby the second ends 2A2, 2B2 are positioned upstream from the inlet opening 50 of the central portion B.

The chamber dividing walls 2A, 2B are further provided with one or more drainage channels 30, which are preferably associated with one, more or each of the droplet catching structures. The drainage channels 30 are elongate and preferably curved, preferably continuously curved, along their elongation. The drainage channels 30 can for instance comprise a curved, for instance helical, shape and can generally be oriented such that it guides droplets which are caught by the catching structures 3 downwards into the housing, in use, the guidance being driven by gravity and preferably also by the incoming gas flow itself.

The cross section of the drainage channels can for instance be circular or rectangular or can have any other suitable shape.

Preferably, the entry opening of the droplet catching structures 3 can abut on or partially or completely define the drainage channel 30. In other words, the drainage channels 30 and droplet catching structures 3 can be seen as integrated in a single structure.

Preferably, the droplet catching structures 3 and/or drainage channels 30 are positioned substantially vertically (having a strong vertical component) while having a curvature which causes it to also extend in a downstream direction (downstream component), when following it from its highest to lowest end.

The device further comprises a first drainage cavity 6 connected to the drainage channels 30 by means of respective drainage openings 60, positioned in a bottom portion of the housing, preferably in a compartment separated from the inner volume or main compartment of the housing which receives and guides the gas flow. The water droplets collected by the droplet catching structures 3 and guided downwardly by the drainage channels 30 are collected in this cavity 6. The drainage cavity 6 is preferably arranged and adapted for not allowing a substantial portion of the gas flow to flow through it. The drainage cavity 6 is positioned at the bottom of the inlet portion A and central portion B of the housing 1 (comprising a cavity extension portion 61 situated below the central portion B).

The drainage cavity 6 is further connected by means of a, preferably integrated with the housing, channel 64 to a first water drainage outlet 63 of the device, for evacuating the drained water.

A relatively small portion of the gas flow may though be allowed to pass through the drainage cavity 6, thereby reducing and thus partially sacrificing the main gas flow, in order to increase water removal efficiency.

Without limiting to specific values or ranges, the ratio between the minimal cross-section of the drainage channel 64 to the minimal cross-section of the main flow channel can for instance be larger than 1%, or larger than 2% or larger than 3% or larger than 4% or larger than 5% and the ratio between the minimal cross-section of the drainage channel 64 to the minimal cross-section of the main flow channel can for instance be smaller than 25% or smaller than 20% or smaller than 15% or smaller than 10% or smaller than 5%.

Optionally, one or more first valves arranged in or downstream of the drainage cavity 6, for instance in the channel 64 or at the drainage outlet 63, or downstream thereof. This or these valve(s) can have predetermined fixed opening(s) or can have a variable opening, the latter for instance being regulated by a respective first controller, for instance based on local or overall operation conditions and/or requirements.

The water separating device further comprises an optional circumferential liquid catching surface 5 or skimmer arranged circumferentially on an inner wall of the housing 1, preferably downstream of the chamber dividing walls 2A, 2B. The catching surface 5 comprises an L-shaped cross-section and has one leg of the L-shape protrude from the inner wall, while the other leg of the L-shape extends substantially parallel with the first longitudinal axis, in the upstream direction. Hereby a circumferential drainage channel 51 is provided, having a circumferential opening directed in upstream direction. The circumferential liquid catching surface 5 or skimmer catches liquid droplets that have not been caught yet upstream, or catches possible water droplets or water flow that may exist on the inner sidewall of the housing 1 and that have not found their way to the drainage channels 30. The circumferential drainage channel 51 guides the caught water droplets downwardly and into the drainage reservoir 6 through one or more drainage openings 62. The circumferential drainage channel defines a remaining flow through opening 50 which leads to the central portion B.

The water separating device further optionally comprises an arrangement of one or more axial flow inertia separator tube components 9 abutting a separation plate, baffle or tube sheet 95, positioned downstream of the chamber dividing walls 2A, 2B, and, preferably downstream of the circumferential liquid catching surface 5, if present.

The axial flow inertia separator tube components 9 are known in the art and are suitable for removing remaining water droplets from the air flow (see e.g. Fig. 4). The axial flow inertia separator tube components 9 and tube sheet 95 are being arranged and adapted such as to not allow gas flow to bypass the axial flow inertia separator tube components arrangement towards the outlet opening 11.

Each of the axial flow inertia separator tube components 9 comprises outer tube 90 and a vane arrangement 91 arranged inside the outer tube 91. The vane arrangement 91 is adapted for swirling the air flow and inducing a centrifugal force to water droplets in the air flow. The remaining air flow can leave the axial flow inertia separator tube component through an inner tube 92 which has a smaller diameter than the outer tube 90 and is arranged concentrically therein. The water droplets remain on the inner wall of the outer tube 90 and are evacuated therefrom via a respective axial flow inertia separator tube component liquid outlet / opening 96 (not depicted). The axial flow inertia separator tube component may further comprise a bridging portion 93 which bridges the annular gap between the inner tube 92 and outer tube 90 and between the axial flow inertia separator tube component 9 and the tube-sheet 95, and which may further define the air outlet 94 of the axial flow inertia separator tube components 9.

Water removed by the arrangement of axial flow inertia separator tube components leaves the respective axial flow inertia separator tube 9 via an opening 96, falls and collects at the bottom of a second drainage cavity 7, which is defined in between the inner wall of the housing, the tube sheet 95 and a further separation plate 8. The second drainage cavity 7 thereby forms a compartment substantially separated from the inner volume or main compartment of the housing which receives and guides the gas flow. It is arranged and adapted for not allowing a substantial portion of the gas flow to flow through it.

The second drainage cavity 7 is further connected by means of a, preferably integrated with the housing, channel 71 to a second water drainage outlet 70 of the device, for evacuating the collected and drained water from the arrangement of axial flow inertia separator tube components.

Also here, a relatively small portion of the gas flow may though be allowed to pass through the second drainage cavity 7, thereby possibly (e.g. again) reducing and thus partially sacrificing the main gas flow, in order to increase water removal efficiency.

Without limiting to specific values or ranges, the ratio between the minimal cross-section of the second drainage channel 71 to the minimal cross-section of the main flow channel can for instance be larger than 1%, or larger than 2% or larger than 3% or larger than 4% or larger than 5% and the ratio between the minimal cross-section of the second drainage channel 71 to the minimal cross-section of the main flow channel can for instance be smaller than 25% or smaller than 20% or smaller than 15% or smaller than 10% or smaller than 5%.

Optionally, one or more second valves arranged in or downstream of the drainage cavity 7, for instance in channel 71 or at the drainage outlet 70, or downstream thereof. This or these second valve(s) can have predetermined fixed opening(s) or can have a variable opening, the latter for instance being regulated by a respective second controller, for instance based on local or overall operation conditions and/or requirements.

Optionally, a single controller can control both variable openings of the first and second valves in order to optimize the overall performance of the system/device, for instance based on overall operation conditions and/or requirements.

While embodiments are also possible having only one, single drainage cavity (6,7) having a single drainage channel and drainage outlet, rather than two separate drainage cavities 6, 7 (with first and second drainage channels 64, 71 and first and second drainage outlets 63, 70), it is believed that having separate drainage cavities and associated drainage channels and drainage outlets, optionally with valves and controllers as described, can provide a better overall performance of the system.

Preferably, the distance or minimal distance between the catch surfaces or louvers 3 and the circumferential liquid catching means or skimmer 5 is larger than 2 cm or larger than 3 cm or larger than 4 cm or larger than 5 cm. Preferably, the distance or minimal distance between the catch surfaces or louvers 3 and the circumferential liquid catching means or skimmer 5 is smaller than 10 cm, or smaller than 9 cm, or smaller than 8 cm, or smaller than 7 cm, or smaller than 6 cm, or smaller than 5 cm.

Preferably, the distance or minimal distance between the circumferential liquid catching means or skimmer 5 and the arrangement of axial flow inertia separator tube components 9 is larger than 2 cm or larger than 3 cm or larger than 4 cm or larger than 5 cm. Preferably, the distance or minimal distance between the circumferential liquid catching means or skimmer 5 and the arrangement of axial flow inertia separator tube components 9 is smaller than 10 cm, or smaller than 9 cm, or smaller than 8 cm, or smaller than 7 cm, or smaller than 6 cm, or smaller than 5 cm.

In the absence of a circumferential liquid catching means or skimmer 5, preferably, the distance or minimal distance between the catch surfaces or louvers 3 and the arrangement of axial flow inertia separator tube components 9 is larger than 2 cm or larger than 3 cm or larger than 4 cm or larger than 5 cm. Preferably, the distance or minimal distance between the catch surfaces or louvers 3 and the arrangement of axial flow inertia separator tube components 9 is smaller than 10 cm, or smaller than 9 cm, or smaller than 8 cm, or smaller than 7 cm, or smaller than 6 cm, or smaller than 5 cm.

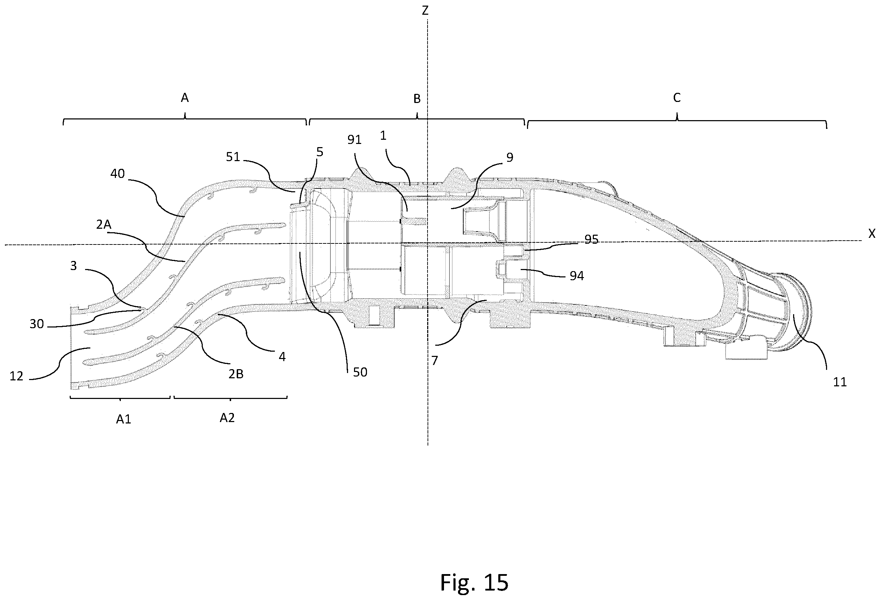

Fig. 15 illustrates a second preferred embodiment of the present disclosure, similar to the first embodiment, but wherein the inlet portion A comprises a tubular wall 4 which is generally S-shaped. Tubular wall 4 comprising two successive bends A1 and A2, each similar to the one defined for the first preferred embodiment, such that the exhaust gas flow entering the inlet portion A from the inlet opening 12 has to change direction twice. Similarly, as for the first preferred embodiment, two chamber dividing walls 2A, 2B (also "flow guiding plates" or "baffles") are defining, together with the internal surface 40 of the tubular wall, separate flow chambers for guiding complementary portions of the incoming gas flow. The chamber dividing walls 2A, 2B generally follow a curvature of the tube-like inlet wall 40. The chamber dividing walls 2A, 2B are provided with catch surfaces or louvers 3 and comprise drainage channels 30 as explained for the first preferred embodiment. As, the flow is redirected twice, first upwards, and then downwards, catch surfaces or louvers 3, and their associated drainage channels can be provided at suitable positions on both sides of one or more respective chamber dividing walls 2A, 2B. The configuration of the drainage channels 30, 50 drainage openings 60, 62 and drainage cavities 6 and 7, as well as the rest of the device, can be similar as described for the first preferred embodiment.

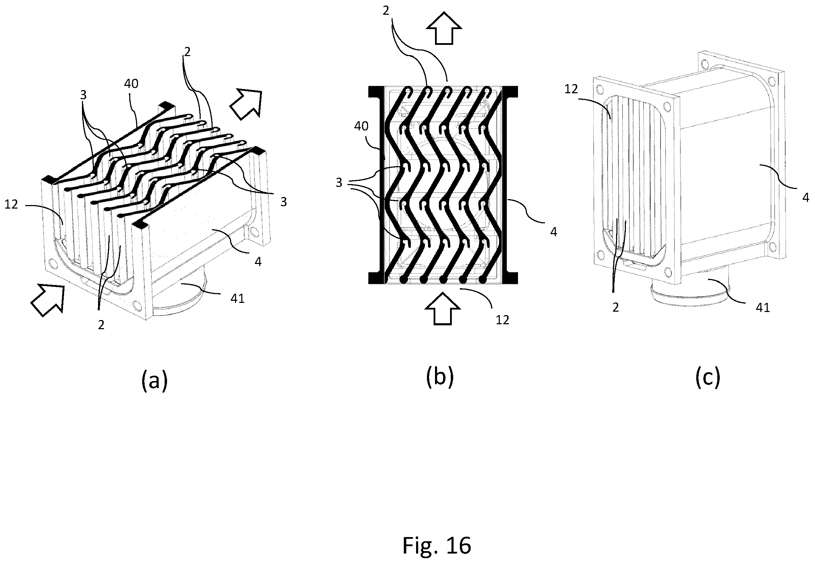

Figures 16 (a), (b) and (c) illustrate a third preferred embodiment of the present disclosure, and disclose an alternative inlet portion A which can be used in combination with any of the central and outlet portions described for the other embodiments. Fig. 16 (a) is a perspective cut view, Fig. 16 (b) a cut view, and Fig. 16 (c) is a perspective view of the same inlet portion A.

The inlet portion A comprises a generally tube-like inlet wall 4 having an inner surface 40, the inlet wall 4 being straight and generally arranged about a second longitudinal axis. Here the inlet wall has a cross-section which is generally rectangular with rounded corners in shape, but the cross-section can for instance have the shape of a racetrack, an obround chape, an elliptical shape, a circular shape etc.

The inlet portion A comprises a plurality of flow guiding means 2 (here six) adapted and arranged such as to define, in combination with said inner surface 40, a plurality of independent flow chambers (Ci), the flow chambers (Ci) allowing respective complementary portions of the gas flow to flow through, for instance in the direction marked by the arrows.

The inlet portion A is adapted to be mounted to a central portion B, whereby the longitudinal axis of the inlet portion A coincides or is parallel or substantially parallel to the longitudinal axis of the central portion B (or of the system). For instance, the inlet portion may comprise a flange with openings, and can be fixed to the central portion B by means of bolts passing though those openings and being received by the central portion B.

Each of the flow guiding means 2 comprises an undulated plate, preferably having a regular undulation. Each undulated plate comprise a plurality of, for instance 4, subsequent bends, when moving from inlet to outlet. While the undulated plates are preferably generally positioned in a direction parallel to the direction of gravity, in use, the bends preferably extend in a plane perpendicular to the direction of gravity.

Preferably, the undulated plates are arranged in a parallel manner, preferably having a constant distance between two adjacent undulated plates. Such a distance can for instance be between 1 and 5 cm, or between 1 and 3 cm, but a larger or smaller distance is not excluded.

The flow guiding means or undulated plates comprise one or more liquid droplet catching structures or louvers 3. Here, the one or more liquid droplet catching structures or louvers 3 are elongate and straight and are preferably arranged in a substantially vertical position in use, in a position adjacent one or more of the bends. For instance, a plurality of liquid droplet catching structures or louvers 3 can be provided on each undulated plate. For instance, for one or more or each undulated plate, liquid droplet catching structures or louvers 3 can be provided on both sides of the plate. For instance, for one, more or all undulated plates, liquid droplet catching structures or louvers 3 can be provided on both sides of the plate in an alternating manner (left/right or reference side/opposite side) along the length of the plate. For instance, for one or more or each undulated plate, liquid droplet catching structures or louvers 3 can be provided at each bend of the plate, preferably on the outside portion of the bend (e.g. the side where the bend is longer).

The liquid droplet catching structures or louvers 3 comprise hook-shaped-type or C-shaped-type cross-section. The opening of the hook-shaped or C-shaped cross-section abuts on or defines a respective drainage channel 30. Additionally or alternatively, separate drainage channels can also be provided.

Preferably, the undulated plates extend from a first end at the inlet opening 12 to a second end at the outlet opening of the inlet portion A. At the inlet opening, the undulated plates may optionally comprise rounded ends.

In some embodiments, for one or more or each undulated plate, liquid droplet catching structures or louvers 3 can be provided at the second end of the undulated plate. In other words, the second end of one or more or each undulated plate may comprise or be defined by a liquid droplet catching structures or louvers 3.

Drainage cavity 6 and the fluid communication between the drainage cavity 6 and the respective drainage channels 30 can be provided as described for the first and second preferred embodiments (which is not depicted). Alternatively or additionally the inlet portion A may comprise a separate or additional outlet 41 for draining liquid collected in the inlet portion A.

In all of the disclosed embodiments, the device may further comprise cooling means for cooling the incoming gas flow in order to stimulate condensation and droplet creation in the incoming gas flow, which is typically hot in case the gas flow is a fuel cell exhaust gas flow. The cooling means can preferably be provided at the inlet portion of the housing, for instance surrounding the wall 4. Additionally, water removal from the incoming gas flow can be enhanced by including cooling fins or ribs on the outer surface of the inlet portion. Such cooling ribs can for instance define or be structurally integrated with the catch surfaces 3.

It will be appreciated that the device for separating liquid from gas according to embodiments of the present disclosure can also be used for removing liquid from an intake air flow of fuel engines.

**Reference list**

| | |
|---|---|
| 1 | Housing |
| 10 | Housing cover |
| 11 | Housing outlet |
| 12 | Housing inlet |
| 100 | Access opening in housing |
| 101 | Housing cover screw holes |
| 102 | Housing mount screw holes |
| 103 | Cover screws |
| 2, 2A,2B | Flow guiding means or baffles or chamber dividing walls |
| 2A1, 2B1 | First ends of 2A, 2B respectively |
| 2A2, 2B2 | Second ends of 2A, 2B respectively |
| 3 | Catch surfaces or louvers |
| 30 | Drainage channel |
| 4 | curved, tubular inlet wall |
| 40 | Inner surface of inlet wall 4 |
| 41 | Separate Outlet of inlet portion A |
| 5 | Circumferential liquid catching means or skimmer |
| 50 | Opening defined by 5 |
| 51 | Circumferential drainage channel |
| 6 | First drainage cavity |
| 60 | Drainage opening for 30 |
| 61 | Extension of drainage cavity 6 |
| 62 | Drainage opening for 50 |
| 63 | First drainage outlet |
| 64 | Internal channel between 6 and 63 |
| 7 | Second drainage cavity |
| 70 | Second drainage outlet |
| 71 | Internal channel between 7 and 70 |
| 8 | Separation plate |
| 9 | Axial flow inertia separator tube component |
| 90 | Outer tube |
| 91 | Vane arrangement |
| 92 | Inner tube |
| 93 | Bridging portion |
| 94 | Air outlet |
| 95 | Tube sheet |
| 96 | Axial flow inertia separator tube component liquid outlet |
| A, A1, A2 | Inlet portion, first and second inlet portions |
| B | Central portion |
| C | Outlet portion |
| C1, C2, C3, Cᵢ | Flow chamber 1, 2, 3, i |
| H, L | High, Low pressure |

## Claims

1. A device for separating liquid from gas, comprising a housing (1) having an inlet portion (A) with an inlet opening (12), an outlet portion (C) with an outlet opening (11) and a central portion (B) arranged in between said inlet and said outlet portion, said central portion having a first longitudinal axis, said housing being adapted for allowing the passage of gas flow from said inlet portion (A) to said central portion (B) to said outlet portion (C), from said inlet opening (12) to said outlet opening (11);
- wherein said inlet portion comprises a generally tube-like inlet wall (4) having an inner surface (40); said inlet wall (4) being generally arranged about a second longitudinal axis;
- wherein said inlet portion (A) comprises one or more flow guiding means (2) adapted and arranged such as to define, in combination with said inner surface (40), two or more independent flow chambers (Cᵢ), said flow chambers (Cᵢ) allowing respective complementary portions of said gas flow to flow through.

2. A device according to any of the previous claims, wherein said one or more flow guiding means (2) comprise curved chamber dividing walls extending between opposed sides of said inner surface (40), at least one, some or all of said curved chamber dividing walls having at least one bend.

3. A device according to claim 1 or 2, wherein said inlet portion comprises at least one bend in said generally tube-like inlet wall.

4. A device according to claim 3, wherein said at least one bend causes a deviation of said tube-like inlet wall (4) corresponds to an angle between 45 and 135 degrees with respect to said second longitudinal axis.

5. A device according to claim 2 and any of the previous claims 3 or 4, wherein a curvature of said chamber dividing wall(s) is/are such as to generally follow a curvature of said tube-like inlet wall (40).

6. A device according to claim 2, wherein said curved chamber dividing wall(s) extend(s) from said inlet opening (12), where it/they has/have an orientation generally parallel to said second longitudinal axis, towards an inlet opening (50) of said central portion (B), where it/they has/have an orientation generally parallel to said first longitudinal axis.

7. A device according to any of the previous claims, wherein said flow guiding means (2) and/or said inner surface (40) comprise one or more liquid droplet catching structures or louvers (3), preferably at, or adjacent and downstream of, to one or more curves of said curved chamber dividing walls or said inner surface (40).

8. A device according to claim 7, wherein said flow guiding means (2) and/or inner surface (40) comprise at least one liquid drainage channel (30) abutting one or more of said liquid droplet catching structures or louvers (3).

9. A device according to any of the previous claims 7 or 8, wherein said one or more liquid droplet catching structures or louvers (3), and if present, at least one liquid drainage channel (30), are elongate and curved and are preferably arranged in a substantially vertical position in use.

10. A device according to claim 8, further comprising a first drainage cavity (6) connected to said at least one drainage channel (30) by means of at least one drainage opening (60), said drainage cavity (6) preferably arranged and adapted for not allowing a substantial portion of the gas flow to flow through it.

11. A device according to any of said claims 7 to 9, wherein said one or more liquid droplet catching structures or louvers (3) are elongate and curved along their elongation and comprise hook-shaped-type or C-shaped-type cross-section, an opening of the hook-shaped or C-shaped cross-section abutting on or defining a or said drainage channel (30).

12. A device according to any of the previous claims, further comprising a circumferential liquid catching surface (5) arranged circumferentially on an inner wall of said housing, downstream of said one or more flow guiding means (2), said surface defining a circumferential drainage channel (51).

13. A device according to claim 12, comprising a first drainage cavity (6) which is preferably adapted and arranged for not allowing a substantial portion of said gas flow to flow through it, and further comprising a drainage opening (62) for connecting said circumferential drainage channel (51) to said first drainage cavity (6).

14. A device according to any of the previous claims, further comprising an arrangement of one or more axial flow inertia separator tube components (9) abutting a separation baffle (95), positioned downstream of said flow guiding means (2) and, if present, preferably downstream of said circumferential liquid catching surface (5), these components being arranged and adapted such as to not allow gas flow to bypass the axial flow inertia separator tube components towards said outlet opening (11).

15. A device according to claim 14, further comprising a second drainage cavity (7) adapted and arranged for collecting liquid removed from said gas flow from said arrangement of one or more axial flow inertia separator tube components (9) and preferably adapted and arranged for not allowing a substantial portion of the gas flow to flow through it.
